(19) Europäisches Patentamt
European Patent Office
Office européen des brevets

(11) **EP 1 294 133 B1**

(12) **EUROPEAN PATENT SPECIFICATION**

(45) Date of publication and mention
of the grant of the patent:
**03.01.2007 Bulletin 2007/01**

(51) Int Cl.:
***H04L 12/54*** *(2006.01)*

(21) Application number: **01122117.3**

(22) Date of filing: **14.09.2001**

(54) **Method and device for searching look-up tables for channel indicators**

Verfahren und Vorrichtung zur Suche in Lookup-Tabellen für Kanalindikatoren

Méthode et dispositif pour la recherche dans des tables de consultation des indicateurs de canal

(84) Designated Contracting States:
**AT BE CH CY DE DK ES FI FR GB GR IE IT LI LU MC NL PT SE TR**

(43) Date of publication of application:
**19.03.2003 Bulletin 2003/12**

(73) Proprietor: **TELEFONAKTIEBOLAGET LM ERICSSON (publ)**
**164 83 Stockholm (SE)**

(72) Inventors:
• **Lerzer, Jürgen**
**92342 Freystadt/Forchheim (DE)**
• **Nourbakhsh, Seyed-Hami**
**90475 Nürnberg (DE)**

(74) Representative: **Schmidt, Steffen J.**
**Wuesthoff & Wuesthoff,**
**Patent- und Rechtsanwälte,**
**Schweigerstrasse 2**
**81541 München (DE)**

(56) References cited:
• **VAN LUNTEREN J: "Towards memory centric computing: a flexible address mapping scheme" ELECTRICAL AND COMPUTER ENGINEERING, 1999 IEEE CANADIAN CONFERENCE ON EDMONTON, ALTA., CANADA 9-12 MAY 1999, PISCATAWAY, NJ, USA,IEEE, US, 9 May 1999 (1999-05-09), pages 385-390, XP010359791 ISBN: 0-7803-5579-2**
• **CLARKE N ET AL: "Implementation of dynamic look-up tables" IEE PROCEEDINGS: COMPUTERS AND DIGITAL TECHNIQUES, IEE, GB, vol. 141, no. 6, 1 November 1994 (1994-11-01), pages 391-7, XP006001625 ISSN: 1350-2387**
• **"OPTIMIZED MEMORY MAPPING MECHANISM" IBM TECHNICAL DISCLOSURE BULLETIN, IBM CORP. NEW YORK, US, vol. 38, no. 8, 1 August 1995 (1995-08-01), pages 477-482, XP000534598 ISSN: 0018-8689**
• **"UNIVERSAL MOBILE TELECOMMUNICATIONS SYSTEM (UMTS);PHYSICAL CHANNELS AND MAPPING OF TRANSPORT CHANNELS ONTO PHYSICAL CHANNELS (FDD)" ETSI TS 125 211 V3.1.1, XX, XX, 2 November 2000 (2000-11-02), pages 1-38, XP002151815**

**Description**

BACKGROUND OF THE INVENTION

Technical Field

The invention relates in general to a method and a device in a wireless communications system for searching one of a plurality of look-up tables (LUTs). In particular, the invention concerns a method and a device for searching an LUT for a first channel indicator to be mapped onto a second channel indicator.

Description of the Prior Art

Lookup tables are also known from the article: J. van Lunteren, "Towards memory centric computing: a flexible address mapping scheme", published in Electrical and Computer Engineering, 1999 IEEE Canadian Conference on Edmonton, Alta., Canada 9-12 May 1999, Piscataway, NJ, USA.

In modern digital wireless communications systems a distinction is made between transport channels (TrCHs) and physical channels (PhCHs). Digital speech, for example, may be sent over a TrCh, which during transmission over the air is allocated a certain PhCH.

According to 3GPP document TS 25.212 V.3.6.0 (2001-06), Technical Specification Group Radio Access Network; Multiplexing and Channel Coding (Release 1999), sections 4.2.12 to 4.2.14, a plurality of TrCHs may be multiplexed onto one coded composite transport channel (CCTrCH). The CCTrCH is then demultiplexed and split onto one or several PhCHs.

Each CCTrCH is assigned an individual look-up table (LUT) for mapping purposes. An LUT contains a plurality of entries and each entry comprises a first channel indicator and a second channel indicator on which the first channel indicator is to be mapped. The first channel indicators are uncoded transport format combination indicator (TFCI) values and the second channel indicators are the corresponding calculated transport format combination (CTFC) values or vice versa. In an uplink mode a mapping of the TFCI values onto the CTFC values is performed and in a downlink mode a mapping of the CTFC values onto the TFCI values.

Each LUT is stored in a memory for example with increasing CTFC or TFCI values. An LUT to be stored for a specific CCTrCH may have a certain maximum size. For each LUT to be stored, a memory portion corresponding to this maximum size is allocated. For example, a dual port random access memory (DPRAM) can be used for this purpose. Such a DPRAM has two separate access ports and can be written via a first access port by the board controller and read via a second access port by a further system component. The two separate access ports have the advantage that there is no disturbance among the board controller and the further system component.

In order to increase the transmission capacity of transmitter boards, the number of CCTrCHs and thus the number of LUTs stored in the memory has to be increased. However, as has been explained above, an increase in the number of CCTrCHs leads to higher memory requirements. Due to the fact that the memory capacity of conventional DPRAMs is limited, the transmission capacity of transmitter boards using such DPRAMs is limited also. Of course, other RAM types like dynamic RAMs (DRAMs) or synchronous dynamic RAMs (SDRAMs) could be used instead of DPRAMs. However, DRAMs and SDRAMs suffer from different drawbacks like low access speeds and inappropriately configured access ports.

There is, therefore, a need for a method and a device in a wireless communications system for storing a plurality of LUTs and for searching one of the stored LUTs for a first channel indicator to be mapped onto a second channel indicator, the method and the device allowing a more economical use of memory resources.

SUMMARY OF THE INVENTION

According to the invention this need is satisfied by a method of searching one of a plurality of LUTs for a first channel indicator to be mapped onto a second channel indicator, the method comprising storing the LUTs in a data memory, the data memory being allocated dynamically to the LUTs in dependence on their actual sizes, storing in a control information memory control information relating to one or more positions of each LUT in the data memory, reading the control information memory to determine one or more positions of a specific LUT in the data memory, and accessing the data memory at the one or more determined positions in order to search the specific LUT for the first channel indicator.

The invention proposes to configure the LUTs for mapping first channel indicators onto second channel indicators such that at least some of the LUTs do not or at least not always assume a fixed maximum size. In other words, the sizes of the LUTs may vary within a specific set of LUTs, from a first set of LUTs to a second, updated set of LUTs, etc.

Based on such LUT configurations, memory resources are dynamically allocated to the LUTs in dependence on their actual sizes. This means that the memory allocation is no longer performed statically in the sense of allocating to each LUT a memory portion corresponding to the maximum size an LUT can theoretically assume. According to the invention it is thus possible to pack the LUTs closer together and to use the available memory resources more efficiently, for example by storing a higher number of LUTs to thereby increase the transmission capacities.

The first and second channel indicators can be values which generally allow a mapping of a first set of channel-related parameters onto a second set of channel-related parameters. For example, the channel indicators may be used for mapping TrCHs onto PhCHs or vice versa.

Writing of the data memory and the control information memory and reading of the data memory and the control memory may be performed by one and the same processing unit or by dedicated processing units. If dedicated processing units are provided, a first processing unit may access the data memory and the control information memory for storing the LUTs and the control information and a second processing unit may access the data memory and the control information memory for reading the control information and for searching the LUTs. The first and the second processing units may access the two memories alternatingly. However, accesses of the first processing unit and the second processing unit may also be performed simultaneously.

According to a preferred implementation of the invention, which can generally be practiced with any type of LUT, a method is proposed which comprises the steps of splitting the data memory into a plurality of data memory parts, each data memory part having a size of $2^i$, wherein i = 0, 1, 2, 3, ...l, of splitting each LUT into a plurality of LUT parts, each LUT part, apart from remainders, having a size of $2^j$, wherein j = 0, 1, 2, 3, ...k, of storing each LUT part in a data memory part which has an appropriate size, and of storing in the control information memory for each LUT control information comprising the positions in the data memory of the LUT's individual LUT parts.

A single LUT may be split such that at least some LUT parts of this LUT have different sizes. For example, an LUT may be split into four LUT parts, the first and second LUT parts having a size of $2^0$ each, the third LUT part having a size of $2^1$, and the fourth LUT part having a size of $2^3$. If the total size of an LUT is a multiple of 2, it is possible to split this LUT into LUT parts such that each LUT part has a size of $2^j$. If, however, the total size of an LUT is different from a multiple of 2, one LUT part of this LUT will have a size different of $2^j$. Such an LUT part is called remainder.

The data memory can be split such that it comprises a number of $m_i$ data memory parts of size $2^z$, wherein z = 0, 1, 2, 3, etc. Preferably, z is chosen such that z = 0 for i = 0 and z = i-1 for i = 1, 2, 3, etc. For example, the data memory may comprise $m_0$ data memory parts of size $2^0$, $m_1$ data memory parts of size $2^0$, $m_2$ data memory parts of size $2^1$, and so on. $m_i$ is preferably chosen such that $m_i = 2^x$, wherein x = 0, 1, 2, 3, etc. The data memory can be split such that the relation $m_{i+1} \leq m_i$ holds.

The control information stored in the control information memory preferably comprises for each LUT a parameter reflecting the size of the LUT. If, for example, the LUTs have sizes $s_p = 2^y$, wherein y = 0, 1, 2, 3, ... $S_p$, the parameter reflecting the size of the LUT can be the absolute size $s_p$ or the power $S_p$.

According to another preferred implementation of the invention, the method further comprises the steps of defining a first memory block containing both the data memory and the control information memory, the data memory comprising the LUTs and the control information memory comprising for each LUT a pointer to a start address of the LUT in the data memory, of reading the control information memory to determine the start address of a specific LUT to be searched, and of searching the specific LUT for the first channel indicator starting at the start address of the LUT in the data memory. According to this approach, the data memory and the control information memory are linked to form a logical memory block. It is, however, not necessary that the data memory and the control information memory which form this memory block are actually located within the same physical memory.

Preferably, the LUTs are stored in the data memory one behind the other such that there is no gap in the data memory between adjacent LUTs. Such an arrangement of the LUTs in the data memory ensures that the LUTs are packed tightly together and occupy as less memory resources as possible. In order to restrict the search for a specific channel indicator to a single LUT of interest, it is necessary that the start address and the end address of the LUT of interest are known. As has been mentioned above, the start address of the LUT of interest can simply be derived from the control information memory. If the LUTs are stored in the data memory one behind the other, the end address of the LUT of interest can be derived from the content of a pointer to the LUT following in the data memory the LUT of interest. Consequently, the search for a specific channel indicator within an LUT of interest can be restricted to a memory window starting at the content of the pointer to the LUT of interest and ending one address before the content of the pointer to the LUT following in the data memory the LUT of interest. The same mechanism can be applied when the size of the LUT of interest which is to be searched has to be derived. One may simply subtract the content of a pointer to the LUT following the LUT of interest from the content of the pointer to the LUT of interest.

When the LUTs are sequentially written into the data memory one behind the other, the end address of the last LUT cannot be determined as outlined above. Therefore, the control information stored in the control information memory may further comprise a pointer to the end address of the last LUT in the data memory.

The memory block which contains the data memory and the control information memory may have a predefined, i.e., fixed size despite the fact that the memory portion occupied by the LUTs in the data memory may vary in dependence on the actual sizes of the LUTs. Memory blocks having a predefined size are advantageous because memory resources for such memory blocks can be allocated in a fixed manner.

According to a preferred embodiment, at least a first memory block and a second memory block are provided, both memory blocks having a similar structure. If two or more memory blocks are provided, a signal can be defined indicating which of the memory blocks contains valid information. It is then possible to implement a mechanism according to which the one or more memory blocks which do not contain valid information may be accessed for writing purposes and the one or more memory blocks which contain valid information may be accessed for reading and searching purposes.

If dedicated processing units are provided, writing may be performed by the first processing unit and reading and searching may be performed by the second processing unit. Preferably, the first processing unit signals to the second processing unit which memory block contains valid information, e.g. which memory block has been written most recently.

A whole memory block can be written anew any time it becomes necessary to change a single LUT. For example, an LUT may have to be changed because the channel indicators have to be revised or updated. By writing a whole memory block anew fragmentation effects can be avoided and a close packing of the LUTs can be ensured.

The above method can be implemented both as a computer program product comprising program code portions for performing the method and as a hardware solution. The computer program product may be stored on a computer-readable recording medium like a data carrier attached to or removable from the computer.

The hardware solution is constituted by a device for searching one of a plurality of LUTs for a first channel indicator to be mapped onto a second channel indicator, wherein the device comprises a data memory for storing the LUTs, the data memory being allocated dynamically in dependence on the actual sizes of the LUTs, a control information memory for storing control information relating to one or more position of each LUT in the data memory, and a processing unit for reading the control information memory to determine one or more positions in the data memory of a specific LUT to be searched and for accessing the data memory at the one or more determined positions to search the specific LUT for the first channel indicator. The device may comprise a further processing unit for determining the actual size of the LUTs, for storing the LUTs in the data memory and for storing the control information in the control information memory.

The LUTs and the control information may be stored in a common physical memory or in separate physical memories. Preferably, the LUTs and the control information are stored in a common DPRAM. This means that the data memory and the control information memory may be co-located within a single DPRAM. The DPRAM, which has two separate access ports, has the advantage that it can be written via a first of the two access ports by the processing unit for storing the LUTs and the control information and read via a second of the two access ports by the processing unit for reading the control information and searching a LUT for the first channel indicator. Instead of DPRAMs, other memories like DRAMs or SDRAMs could be used as well.

Between the two processing units a signalling line may be arranged for enabling a coordination of the individual operations performed by the two processing units. If, for example, the above memory arrangement comprising a plurality of memory blocks is used, the signalling line may be employed for indicating to one of the processing units which of the memory blocks contains valid information.

The device for searching one of a plurality of LUTs for a first channel indicator to be mapped onto a second channel indicator may be used in various parts of a wireless communications system. Preferably, the device is part of a transceiver.

BRIEF DESCRIPTION OF THE DRAWINGS

Further advantages of the invention will become apparent upon reference to the following description of preferred embodiments of the invention in the light of the accompanying drawings, in which:

Fig. 1       shows a schematic view of a device according to the invention for searching LUTs for channel indicators;

Fig. 2       shows the device of Fig. 1 in more detail as configured in accordance with a first embodiment of the invention;

Fig. 3       shows a schematic diagram of a memory configuration according to the first embodiment of the invention;

Figs. 4, 5   diagrammatically show the signalling among the components of the device depicted in Fig. 2;

Fig. 6       shows a schematic diagram of a memory configuration according to a second embodiment of the invention; and

Fig. 7       diagrammatically shows memory splitting and memory allocation according to the second embodiment of the invention.

## DESCRIPTION OF PREFERRED EMBODIMENTS

Although the present invention can be practiced in any communications system in which LUTs are used for mapping a first channel indicator onto a second channel indicator, the following description of preferred embodiments is exemplarily set forth with respect to a wireless communications system according to the third generation partnership project (3GPP).

According to 3GPP document TS 25.302 V3.9.0 (2001-06), Technical Specification Group Radio Access Network; Services Provided by the Physical Layer (Release 1999), sections 4 - 7, a 3GPP wireless communications system comprises a physical layer that offers data transport services to higher layers.

The access to these services is through the use of TrCHs. The characteristics of a TrCH are defined by its transport format. The transport format specifies the physical layer processing to be applied to the TrCH in question, such as convolutional channel coding and interleaving, and any service-specific rate matching.

Multiple TrCHs can be set up simultaneously. In a downlink mode, the multiple TrCHs are processed and multiplexed together to form a single output data stream which is denoted CCTrCH. The data stream of the CCTrCH is then demultiplexed and split onto one or several PhCH data streams.

As has been explained above, multiple TrCHs can be set up simultaneously, each TrCH having a specific transport format. The transport format for a specific TrCH is selected from a transport format set (TFS), i.e., a list of transport formats associated to the TrCH. Since one or several TrCHs, each having a specific transport format, are multiplexed onto a CCTrCH, different aggregations of transport formats may result. However, not all possible aggregations may be admissible at a given point of time, e.g. in order to avoid that the TrCHs multiplexed onto one CCTrCH all use transport formats corresponding to high bit rates simultaneously. Therefore, admissible aggregations of transport formats have to be defined for the CCTrCHs. An admissible aggregation of transport formats simultaneously transmitted on one CCTrCH is denoted transport format combination (TFC).

For each transport format within a TFS there exists a specific transport format indicator (TFI). This means that the TFI is a label for a specific transport format within a given TFS. From the TFIs of all parallel TrCH mapped onto a CCTrCH, a transport format combination indicator (TFCI) is built and appended to a physical control signal. Since the TFCIs are up to 10 bit codes, there exists for each CCTrCH a maximum of $2^{10}$ = 1024 possible TFCIs.

The TFCI is used to inform a receiving side of the currently valid TFC, and hence how to decode, demultiplex and deliver the received data on the appropriate TrCHs. The TFCI is a representation of the current TFC. There is a one-to-one correspondence between a certain value of the TFCI and a certain TFC. The current configuration of the coding and multiplexing of the TrCHs onto a CCTrCH is signaled to the network for each 10 ms frame by means of the TFCI bits. The TFCI signaling thus consists of pointing out to the receiving side the current TFC within a configured transport format combination set (TFCS).

For efficient signaling of TFCs, calculated transport format combinations (CTFCs) are used as described in 3GPP document TS 25.331 V 3.7.0 (2001-06), Technical Specification Group Radio Access Network; RRC Protocol Specification, (Release 1999), Section 14.10.

Let I be the number of TrCHs that are included in the TFC. Each transport channel $TrCH_i$, i = 1, 2,... I, has $L_i$ transport formats, i.e. the $TFI_i$ can take $L_i$ values, $TFI_i \in \{0,1,2,...,L_i -1\}$.

$$\text{define} \ \ P_i = \prod_{j=0}^{i-1} L_j \, ,$$

$$\tag{1}$$

where i = 1, 2,... , I, and $L_0$ = 1.

Let $TFC(TFI_1, TFI_2, ... , TFI_I)$ be the TFC for which $TrCH_1$ has transport format $TFI_1$, $TrCH_2$ has transport format $TFI_2$, etc. The corresponding $CTFC(TFI_1, TFI_2,.., TFI_I)$ is then computed as:

$$CTFC(TFI_1, TFI_2, ..., TFI_I) = \sum_{i=1}^{I} TFI_i \cdot P_i \, .$$

$$\tag{2}$$

As becomes apparent from the above, there exists for each TFCI value a corresponding CTFC value. Hence, for each CCTrCH an LUT can be configured for a mapping of CTFC values onto TFCI values (downlink) or a mapping of TFCI values onto CTFC values (uplink). This LUT will have to be reconfigured each time a CCTrCH is changed.

Changes to a CCTrCH may occur because one or more TrCHs are added to the CCTrCH, removed from the CCTrCH or newly configured within the CCTrCH.

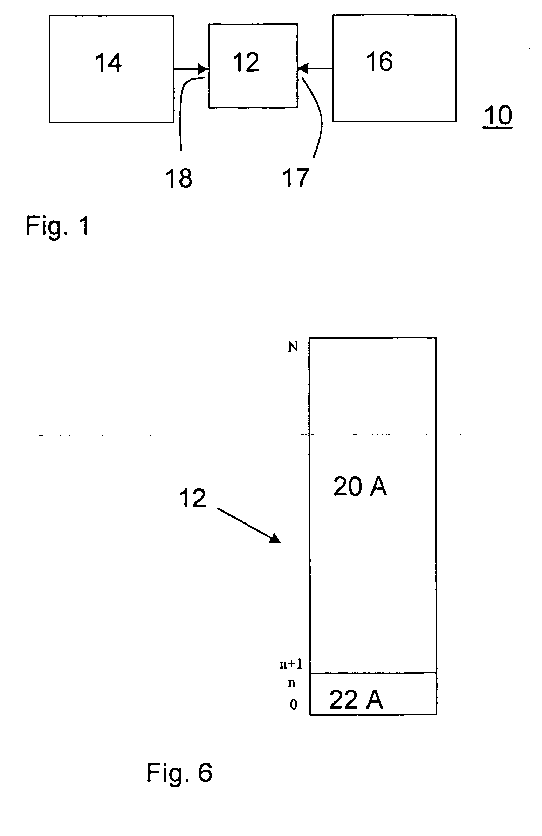

In the following, two different embodiments according to the invention for dynamically storing the LUTs of a plurality of CCTrCHs in a memory will be described. First, a typical hardware configuration comprising a memory, in which the LUTs are to be stored, is described with reference to Fig. 1.

In Fig. 1, several components for handling the LUTs in a 3GPP transceiver 10 are shown. The LUTs are stored in a memory 12 which is accessed both by a first processing unit 14 in the form of a device processor and a second processing unit 16 in the form of an ASIC. The memory 12 is a DPRAM, which communicates via a first 18 of the two ports with the first processing unit 14 and via a second 17 of the two ports with the second processing unit 16. Within the first processing unit 14, a plurality of LUTs are set up, reconfigured and released in response to a set up, reconfiguration or release of TrCHs on baseband.

Although each LUT may have a maximum size of up to 1.024 entries (corresponding to 1.024 TFCI values per CCTrCH), the average size of an LUT will be 25 to 50 times lower than this maximum size. Therefore, the processing unit 14 determines the actual sizes of the LUTs and accesses the memory 12 to store the LUTs in a data memory portion thereof. The data memory portion is dynamically allocated to the LUTs in dependence on their actual sizes. Moreover, the processing unit 14 determines control information relating to the positions of the LUTs in the data memory portion and stores this control information in a control information portion of the memory 12. The data memory portion and the control memory portion are not depicted in Fig. 1.

The LUTs stored in the memory 12 are permanently used by the second processing unit 16 for mapping, for a specific LUT, a first parameter onto a second parameter, specifically for mapping a first channel indicator in the form of a TFCI value onto a second channel indicator in the form of a CTFC value. To this end, the second processing unit 16 in a first step accesses the control information memory portion of the memory 12 to read the positions in the data memory portion of the LUT of interest of the memory 12. In a second step, the second processing unit 16 accesses the data memory portion of the memory 12 at the one or more positions of the LUT of interest and searches this LUT for the first channel indicator in order to find the corresponding second channel indicator.

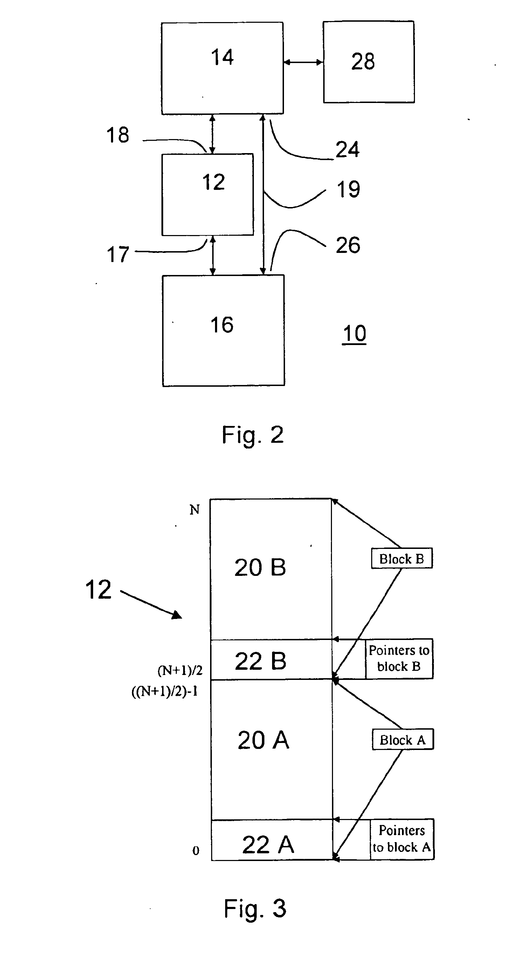

In Fig. 2, a first embodiment of the inventive concept generally explained above with reference to Fig. 1 is shown. In addition to Fig. 1, a signalling line 19 arranged between a port 24 of the first processing unit 14 and a port 26 of the second processing unit 16, and a further memory 28 assigned to the first processing unit 14 are depicted. The memory 28 assigned to the first processing unit 14 is a SDRAM.

In Fig. 3, the configuration of the memory 12 arranged between the first processing unit 14 and the second processing unit 16 is shown in more detail. As becomes apparent from Fig. 3, the memory 12 is divided into a first memory block A and a second memory block B. The two memory blocks A, B have an identical size of (N+1)/2, wherein N+1 is the total size of the memory 12. The two memory blocks A, B each comprise a data memory 20A, 20B and a control information memory 22A, 22B. The data memory 20A of the first data block A contains a complete set of LUTs and the control information memory 22A comprises for each LUT stored in the data memory 20A a pointer to the start address of the LUT in the data memory 20A. Data memory 20B and control information memory 22B of the second memory block B have a similar structure. However, whereas one of the two data blocks A, B contains valid information, the other of the two data blocks A, B contains information which is no longer valid. The reason therefore will be discussed in more detail below.

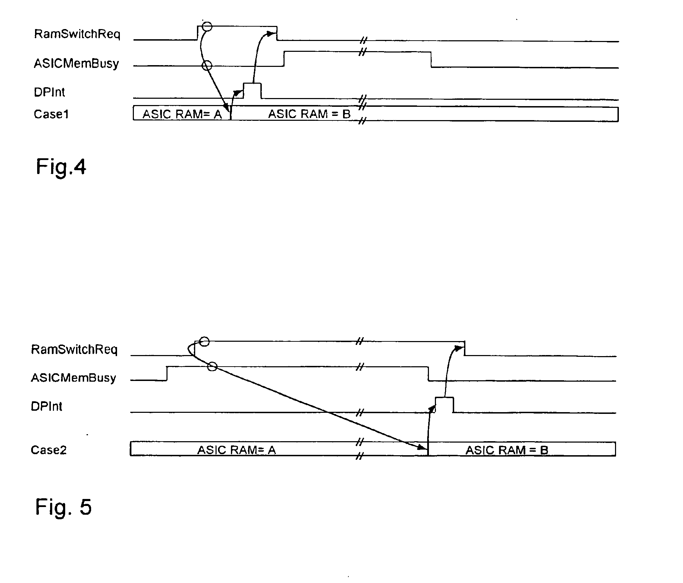

The first processing unit 14 shall write to that memory block A, B which is not accessed by the second processing unit 16. On the other hand, the second processing unit 16 shall not read from that memory block A, B which is currently updated by the first processing unit 14. Therefore, a memory access protocol has to be defined which ensures that there is no disturbance between the first and the second processing unit 14, 16. The memory access protocol is depicted in Figs. 4 and 5.

As becomes apparent from Figs. 4 and 5, three different signals are exchanged via the signalling line 19 between the first processing unit 14 and the second processing unit 16. The first signal is a request for memory block switching (RamSwitchReq), the second signal indicates that the second processing unit 16 is busy (ASICmemBusy), and the third signal signals that the requested memory block switching has been performed (DPInt). The signal ACICmemBusy is active while a TFCI search algorithm is running and will be deactivated as soon as the TFCI search is finished.

In the first case depicted in Fig. 4, the second processing unit 16, which is the ASIC, accesses the first memory block A and the first processing unit 14 writes the second memory block B by mirroring the content of the first processing unit's 14 memory 28 by way of direct memory access (DMA) into the memory 12 (Fig. 2). Once the first memory unit 14 is finished with writing to the second memory block B, it requests for a memory block switching by setting the signal RamSwitchReq inside of the second processing unit 16 via the signalling line 19. If the signal ASICmemBusy is not active (Fig. 4), the second processing unit 16 will immediately perform a memory switch and access memory block B from now on. As soon as the second processing unit 16 is finished with switching to memory block B, the second processing unit 16 generates an interrupt DPInt to signal to the first processing unit 14 that the memory block switching is done. The first processing unit 14 may now update memory block A.

The situation depicted in Fig. 5 may occur when the ASICmemBusy signal is active as the first processing unit requests switching of the memory blocks. In this case, the first processing unit 14 waits until the second processing unit 16 has finished its access to memory block A. As soon as the access is finished, the second processing unit 16 will switch to the second memory block B and will generate a DPInt signal when the switching is completed. During a start-up phase, the first processing unit can access by default the first memory block A by using the same handshake mechanisms as described above.

In the following, the process of writing a memory block A, B by the first processing unit 14 will exemplarily be described in more detail for the case of writing the first memory block A depicted in Fig. 3. The first processing unit 14 writes the LUTs to the data memory 20A one behind the other such that there is no gap between adjacent LUTs. It further writes into the control information memory 22A for each LUTs a pointer which points to the position, i.e., the start address in the data memory 20A of each LUT. Additionally, it writes into the control information memory 22A a pointer to the end address in the data memory 20A of the last LUT. If, for example, 100 CCTrCHs are configured in the processing unit 14, the 100 LUTs for those 100 CCTrCHs plus 101 pointers are written to the first memory block A. In a downlink mode the LUTs are preferably stored with increasing CTFC values. The data memory 20A starts immediately after the end of control information memory 22A.

If, for example, on address 17 of the control information memory 22A depicted in Fig. 3 the value 1033 is written, this means that the LUT comprising the TFCI values for the CCTrCH number 17 is stored starting from the address 1033 in the first memory block A.

In order to make the TFCI search as efficient as possible, it has to be ensured that the second processing unit 16 only searches within a memory window corresponding to the single LUT of interest. Thus, not only the start address of a specific LUT has to be known, but also the end address or, which is equivalent, the size of the LUT. The size of the LUT to be searched is derived by subtracting the content of a pointer to the LUT following the LUT of interest from the content of the pointer to the LUT of interest. If, for example, the size of the LUT assigned to CCTrCH number 17 has to be calculated, the content of the pointer at position 18 within the control information memory 22A has to be determined and subtracted from the content of the pointer at position 17. This can be written as

```
CurrentPointer = ID number of the CCTrCH;
Size = *(CurrentPointer+1)-(*CurrentPointer);
```

$$(4)$$

To avoid fragmentation effects, the first processing unit 14 always writes a complete memory block. Fragmentation could happen when an LUT is reconfigured and the new size of the reconfigured LUT is different from the old size. Similar problems will occur when one LUT is released and a new LUT is set up if the sizes of the two LUTs are different. As pointed out above, this is avoided by updating a complete memory block A, B.

In the following, a summarizing overview will be given for the method of updating and searching one of a plurality of LUTs according to the first embodiment of the invention.

The first processing unit 14 depicted in Fig. 2 starts with copying the CTFC and TFCI values for all available CCTrCHs from the memory 28 assigned to the first processing unit 14 to the data memory 20A, 20B of that data block A, B which is not used by the second processing unit 16. The first processing unit 14 then updates all pointers in the control information memory of that data block for all CCTrCH which are activated. Finally, the first processing unit 14 performs a handshake with the second processing unit 16 as described above to make sure that the second processing unit 16 will from now on access the updated memory block.

The second processing unit 16 performs access to the updated memory block as follows. In a first step, the second processing unit 16 reads two values from the control information memory of the updated data block. The first value is read from the address which is equal to the identification number of the CCTrCH to be processed. The second value is read from the address which is equal to the next identification number. The second processing unit 16 will then calculate the size of the LUT of the CCTrCH to be processed according to relation (4). The second processing unit 16 will finally perform TFCI searches starting at an offset within the data block equal to the first value and inside a memory window having the calculated size.

Now, a second embodiment of the method according to the invention of storing and searching one of a plurality of LUTs will be described. Like the first embodiment, the second embodiment is based on the hardware configuration depicted in Fig. 1.

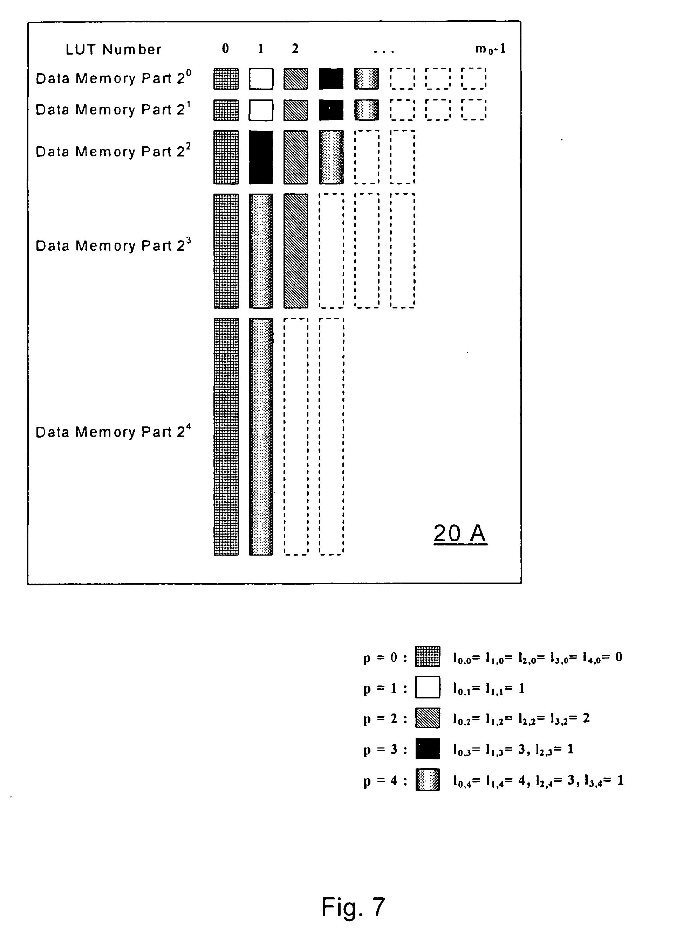

In Fig. 6, the structure of the memory 12 of Fig. 1 is shown in more detail for the second embodiment. As becomes apparent from Fig. 6, the control information memory 22A starts at address 0 and ends at address n, whereas the data memory 20A starts at address n+1 and ends at address N.

The data memory 20A is split into a plurality of data memory parts as shown in Fig. 7. As can be seen from Fig. 7, the data memory 20A comprises $m_0 = 8$ data memory parts of size $2^0$, $m_1 = 8$ data memory parts of size $2^0$, $m_2 = 6$ data memory parts of size $2^1$, $m_3 = 6$ data memory parts of size $2^2$ and $m_4 = 4$ data memory parts of size $2^3$.

Each LUT to be stored by the first processing unit 14 of Fig. 1 in the data memory 20A depicted in Fig. 7 is split into a plurality of LUT parts in a similar manner as the data memory 20A. Accordingly, each LUT is split into a plurality of LUT parts having a size of $2^j$, wherein j=0, 1, 2, 3, ... k. However, contrary to the splitting of the data memory 20A, the LUTs are split such that, apart from the first two LUT parts, no two LUT parts of one and the same LUT have the same size. This means that an LUT having a maximum size of $2^k$ entries is split such that it comprises one LUT part $2^0$, one LUT part $2^1$, etc. LUT part $2^0$ contains the LUT entry 0 and an LUT part $2^j$ contains the entries $2^{j-1}$ ... $2^j$-1.

Generally, an LUT p will have a total size $s_p$, i.e. will have $s_p$ entries. $s_p$ is not necessarily a multiple of 2. For the LUT p with LUT parts $2^j$ (j=1, 2, ... $S_p$) altogether $S_p$+1 data memory parts have to be allocated, with $S_p = \lceil \log_2 s_p \rceil$. In other words, the LUT p will be split into $S_p$+1 LUT parts and each LUT part will be stored in a data memory part having an appropriate, i.e., an identical or a bigger size. A data memory part having such a bigger size will be required when the LUT has a size which is not a multiple of 2, so that splitting of the LUT will result in a remainder having a size different from $2^j$. This remainder is stored in a data memory part which has, compared to the size of the remainder, a slightly bigger size.

The position of an LUT part $2^j$ of a certain LUT p within the data memory 20A, i.e., within all $m_i$ data memory parts of size $2^i$, is denoted $l_{j,p}$ wherein p = 0, 1, ..., $m_0$-1 and $l_{j,p}$ = 0, 1, ..., $m_j$-1. Control information relating to the positions of the LUT parts of a certain LUT are stored in the control information memory 20B depicted in Fig. 6. The control information stored for each LUT p comprises the size parameter $s_p$ or $S_p$ of the LUT and the positions $l_{j,p}$ of the LUT parts $2^j$ constituting the LUT p.

In Fig. 7, the storing of five LUTs in the data memory 20A is exemplarily depicted. As can be seen from Fig. 7, the data memory 20A is split such that LUTs having a maximum size of 16 entries can be stored. LUTs 0 and 4 have this maximum size of 16 entries, LUT 1 has a size of two entries, LUT 2 has a size of 8 entries and LUT 3 has a size of 4 entries. In Fig. 7, the positions $l_{j,p}$ of the LUT parts $2^j$ are depicted also. From Fig. 7 it can furthermore be seen that the $m_i$ data memory parts of size $2^i$ satisfy the condition $m_{i+1} \leq m_i$.

In order to access a specific LUT p in the data memory 20A, the second processing unit 16 first accesses the control information memory 20B to determine the plurality of positions at which the LUT parts of the LUT p to be subjected to a TFCI search are located. Departing from an LUT p having $s_p$ entries, the number of the position of an entry within the LUT p is denoted a, wherein a = 0, 1, ... $s_p$-1. The position $pos_{a,p}$ of an entry having the position a within the LUT p within the whole data memory 20A depicted in Fig. 6 can be calculated according to

$$\texttt{for a = 0: pos}_{a,p} \texttt{ = q + l}_{0,p}$$

$$\texttt{for a} \neq \texttt{0: pos}_{a,p} \texttt{ = q + m}_0 \texttt{ + } \sum_{j=1}^{A} 2^{j-1}{*}\texttt{m}_j \texttt{ + (a-2}^A\texttt{)}{*}\texttt{m}_{A+1} \texttt{ +l}_{A,p}$$

$$(5)$$

wherein q = n+1 denotes the memory offset of the data memory 20A within the memory 12 (Fig. 6) and wherein $A = \lfloor \log_2 a \rfloor$.

The second processing unit depicted in Fig. 1 accesses the data memory 20A for searching a specific LUT p at the various positions of the individual LUT parts in accordance with equation (5). The first processing unit 14 performs LUT set-up, reconfiguration and release as follows:

The setup of an LUT p contains the following steps:

1. first processing unit 14 calculates $S_p$.
2. FOR j=0 to $S_p$:

    2.1 first processing unit 14 determines free position $l_{j,p}$
    2.2 If there is no free position $l_{j,p}$ the setup procedure is stopped and the setup of LUT p is rejected

3. first processing unit 14 writes the size $s_p$ and the positions $l_{j,p}$ for j=0, 1, ..., $S_p$ for LUT p into the control information memory 22A.

4. first processing unit 14 writes all entries of LUT p into the data memory parts $2^j$ at the determined positions $l_{j,p}$ for j=0, 1, ..., $S_p$ according to equation (5).

The reconfiguration of an LUT p contains the following steps:

1. first processing unit 14 calculates the new $S_p$.

2. FOR j = 0 to (old $S_p$):

    2.1 IF $j \leq$ (new $S_p$) THEN

        2.1.1 first processing unit 14 determines position $l_{j,p}$ of LUT already stored.

    2.2 ELSE

        2.2.1 first processing unit 14 releases Part $2^j$ with position $l_{j,p}$.

        2.2.2 first processing unit 14 resets $l_{j,p}$ entry in the control information memory 22A.

3. FOR j = (old $S_p$+1) to (new $S_p$):

    3.1 first processing unit 14 determines free position $l_{j,p}$

    3.2 if there is no free position $l_{j,p}$, the reconfiguration procedure is stopped and the reconfiguration of LUT p is rejected

4. first processing unit 14 writes the size $S_p$ and the positions $l_{j,p}$ for j = (old $S_p$+1), (old $S_p$+2) ,..., (new $S_p$) for LUT p into the control information memory 22A.

5. first processing unit 14 writes all entries of LUT p into the data memory parts $2^j$ with the determined positions $l_{j,p}$ for j = 0, 1,..., (new $S_p$) according to equation (5).

The release of an LUT p contains the following steps:

1. first processing unit 14 releases all data memory parts $2^j$ allocated to LUT p.

2. first processing unit 14 resets the $S_p$ and all $l_{j,p}$ entries in the control information memory 22A.

The following parameterisation gives an example how the TFCI handling in the downlink of a 3GPP basestation can be implemented:

- k = 10 (maximum LUT size = $2^{10}$ entries)
- first channel indicator corresponds to a CTFC value (24bit)
- second channel indicator corresponds to a TFCI value (10bit)
- 512 CCTrCHs
- $m_0 = m_1 = m_2 = m_3 = m_4 = m_5 = m_6 = 512$, $m_7 = 256$, $m_8 = 128$, $m_9 = 64$, $m_{10} = 32$

The parameterization allows to store 512 TFCI LUTs (TFCI and CTFC values) with a maximum size of 64 entries, 256 TFCI LUTs with a maximum size of 128 entries, 128 TFCI LUTs with a maximum size of 256 entries, 64 TFCI LUTs with a maximum size of 512 entries or 32 TFCI LUTs with a maximum size of 1024 entries. This is far more than generally required.

Such an implementation would require a complexity of the memory 12 of 96k*34bit + control information (<6k*10bit). The memory 12 could therefore be realized by a 128k*36bit DPRAM.

It should be noted that the general concept of storing LUTs described with reference to Figs. 6 and 7 is neither restricted to an application in the field of wireless communications systems nor to mapping of channel indicators. It can generally be used for storing LUTs in a memory comprising a data memory and a control information memory.

**Claims**

1. A method in a wireless communications system of searching one of a plurality of look-up tables herein called LUTs for a first channel indicator to be mapped onto a second channel indicator, comprising

    - storing the LUTs in a data memory (20A, 20B), the data memory (20A, 20B) being allocated dynamically to the LUTs in dependence on the actual sizes of the LUTs;

    - storing in a control information memory (22A, 22B) control information relating to one or more positions of each LUT in the data memory (20A, 20B);

    - reading the control information memory (22A, 22B) to determine one or more positions in the data memory (20A, 20B) of a specific LUT to be searched;
- accessing the data memory (20A, 20B) at the one or more determined positions to search the specific LUT for the first channel indicator.

2. The method according to claim 1,
   wherein the data memory (20A, 20B) and the control information memory (22A, 22B) are accessed on the one hand by a first processing unit (14) which stores the LUTs and the control information and on the other hand by a second processing unit (16) which reads the control information and searches the LUTs.

3. The method of claim 2,
   wherein accesses of the first processing unit (14) and the second processing unit (16) are performed simultaneously.

4. The method according to one of claims 1 to 3, further comprising

   - splitting the data memory (20A, 20B) into a plurality of data memory parts, each data memory part having a size of $2^i$,
   wherein i = 0, 1, 2, 3,... 1;
   - splitting each LUT into a plurality of LUT parts, each LUT part, apart from remainders, having a size of $2^j$,
   wherein j = 0, 1, 2, 3,... k;
   - storing each LUT part in a data memory part which has an appropriate size; and
   - storing in the control information memory (22A, 22B) for each LUT control information comprising the positions in the data memory of the LUTS individual LUT parts.

5. The method according to claim 4,
   wherein at least some LUT parts of a single LUT have different sizes.

6. The method according to claim 4 or 5,
   wherein the data memory (20A, 20B) comprises $m_i$ data memory parts of size $2^z$, wherein z = 0, 1, 2, 3, etc.

7. The method according to claim 6,
   wherein $m_i = 2^x$, wherein x = 0, 1, 2, 3, etc.

8. The method according to claim 6 or 7,
   wherein the data memory (20A, 20B) is split such that $m_{i+1} \leq m_i$.

9. The method according to one of claims 4 to 8,
   wherein storing the control information comprises storing for each LUT a parameter reflecting the size of the LUT.

10. The method according to one of claims 4 to 9,
    wherein the LUTs have sizes $s_p = 2^y$, wherein y = 0, 1, 2, 3,... $S_p$.

11. The method according to one of claims 1 to 3, further comprising

    - defining a first memory block (A) containing both the data memory (20A) and the control information memory (22A), the data memory (20A) comprising the LUTs and the control information memory (22A) comprising for each LUT a pointer to a start address of the LUT in the data memory (20A);
    - reading the control information memory (22A) to determine the start address of a specific LUT to be searched; and
    - searching the specific LUT for the first channel indicator starting at the start address of the LUT in the data memory (20A).

12. The method according to claim 11,
    wherein the LUTs are stored in the data memory (20A) one behind the other such that there is no gap in the data memory (20A) between adjacent LUTs.

13. The method according to claim 11 or 12,
    wherein the size of the LUT to be searched is derived by subtracting the content of a pointer to the LUT following the LUT to be searched from the content of the pointer to the LUT to be searched.

**14.** The method of one of claims 11 to 13,
wherein the first memory block (A) has a predefined size.

**15.** The method according to one of claims 11 to 14,
wherein the control information further comprises a pointer to the end address of the last LUT in the data memory (20A).

**16.** The method according to one of claims 11 to 15, further comprising defining a second memory block (B) having a similar structure like the first memory block (A) and defining a signal indicating which of the memory blocks (A, B) contains valid information.

**17.** The method according to claim 16, further comprising:

- writing the memory block (A, B) which does not contain valid information; and
- reading and searching the memory block (B, A) which contains valid information.

**18.** The method of claim 16 or 17,
wherein the writing is performed by the first processing unit (14), the reading and searching is performed by the second processing unit (16), and wherein the first processing unit (14) signals the second processing unit (16) which memory block (A, B) contains valid information.

**19.** The method according to one of claims 11 to 18,
wherein upon changing of a single LUT a whole memory block (A, B) is written anew.

**20.** A computer program product comprising program code portions for performing the steps of one of claims 1 to 19 when the program product is run on a computer.

**21.** The computer program product of claim 20, stored on a computer-readable recording medium.

**22.** A device in a wireless communications system for searching one of a plurality of look-up tables herein called LUTs for a first channel indicator to be mapped onto a second channel indicator, comprising:

a) a data memory (20A, 20B) for storing the LUTs, the data memory (20A, 20B) being allocated dynamically in dependence on the actual sizes of the LUTs;
b) a control information memory (22A, 22B) for storing control information relating to one or more positions of each LUT in the data memory (20A, 20B); and
c) a processing unit (16)

- for reading the control information memory (22A, 22B) to determine one or more positions in the data memory (20A, 20B) of a specific LUT to be searched and
- for accessing the data memory (20A, 20B) at the one or more determined positions to search the specific LUT for the first channel indicator.

**23.** The device according to claim 22, further comprising a further processing unit (14) for determining the actual size of the LUTs, for storing the LUTs in the data memory (20A, 20B) and for storing the control information in the control information memory (22A, 22B).

**24.** The device according to claim 22 or 23, wherein the LUTs and the control information are stored in a common DPRAM (12).

**25.** The device according to claim 23 or 24, further comprising a signaling line (19) arranged between the two processing units (14, 16), the signaling line enabling a coordination of the operations performed by the two processing units (14, 16).

**26.** A transceiver (10) for a wireless communications system comprising a device according to one of claims 22 to 25.

**Patentansprüche**

1. Verfahren in einem System zur drahtlosen Kommunikation zum Durchsuchen einer aus einer Mehrzahl von Nachschlagetabellen (Look-up tables; LUTs) nach einer auf eine zweite Kanalkennung abzubildenden ersten Kanalkennung, das Folgendes umfasst:

   - ein Speichern der LUTs in einem Datenspeicher (20A, 20B), wobei der Datenspeicher (20A, 20B) dynamisch den LUTs in Abhängigkeit von den tatsächlichen Größen der LUTs zugewiesen wird;
   - ein Speichern von Steuerinformationen in einem Steuerinformationsspeicher (22A, 22B) bezüglich einer oder mehrerer Positionen jeder LUT in dem Datenspeicher (20A, 20B);
   - ein Auslesen des Steuerinformationsspeichers (22A, 22B), um eine oder mehrere Positionen in dem Datenspeicher (20A, 20B) einer spezifischen zu durchsuchenden LUT zu bestimmen;
   - ein Zugreifen auf den Datenspeicher (20A, 20B) an der einen oder an den mehreren bestimmten Positionen, um die spezifische LUT nach der ersten Kanalkennung zu durchsuchen.

2. Verfahren nach Anspruch 1, wobei auf den Datenspeicher (20A, 20B) und auf den Steuerinformationsspeicher (22A, 22B) zum einen mittels einer ersten Verarbeitungseinheit (14), welche die LUTs und die Steuerinformationen speichert, und zum anderen mittels einer zweiten Verarbeitungseinheit (16) zugegriffen wird, welche die Steuerinformationen liest und die LUTs durchsucht.

3. Verfahren nach Anspruch 2, wobei die Zugriffe der ersten Verarbeitungseinheit (14) und der zweiten Verarbeitungseinheit (16) gleichzeitig durchgeführt werden.

4. Verfahren nach einem der Ansprüche 1 bis 3, das ferner Folgendes umfasst:

   - ein Aufteilen des Datenspeichers (20A, 20B) in eine Mehrzahl von Datenspeicherteilen, wobei jeder Datenspeicherteil eine Größe von $2^i$ besitzt,
   wobei i = 0, 1, 2, 3,... l;
   - ein Aufteilen jeder LUT in eine Mehrzahl von LUT-Teilen, wobei jeder LUT-Teil, abgesehen von Resten, eine Größe von $2^j$ besitzt, wobei j = 0, 1, 2, 3,... k;
   - ein Speichern jedes LUT-Teils in einem Datenspeicherteil, der eine geeignete Größe besitzt; und
   - ein Speichern von Steuerinformationen für jede LUT in dem Steuerinformationsspeicher (22A, 22B), welche die Positionen der einzelnen LUT-Teile der LUT in dem Datenspeicher umfassen.

5. Verfahren nach Anspruch 4, wobei zumindest einige LUT-Teile einer einzelnen LUT unterschiedliche Größen besitzen.

6. Verfahren nach einem der Ansprüche 4 oder 5, wobei der Datenspeicher (20A, 20B) $m_i$ Datenspeicherteile der Größe $2^z$ aufweist, wobei z = 0, 1, 2, 3, etc.

7. Verfahren nach Anspruch 6, wobei $m_i = 2^x$, wobei x = 0, 1, 2, 3, etc.

8. Verfahren nach Anspruch 6 oder 7, wobei der Datenspeicher (20A, 20B) so aufgeteilt ist, dass $m_{i+1} \leq m_i$.

9. Verfahren nach einem der Ansprüche 4 bis 8, wobei das Speichern der Steuerinformationen das Speichern eines Parameters für jede LUT umfasst, der die Größe der LUT widerspiegelt.

10. Verfahren nach einem der Ansprüche 4 bis 9, wobei die LUTs die Größen $s_p = 2^y$ besitzen, wobei y = 0, 1, 2, 3,... $S_p$.

11. Verfahren nach einem der Ansprüche 1 bis 3, das ferner Folgendes umfasst:

    - ein Definieren eines ersten Speicherblocks (A), der sowohl den Datenspeicher (20A) als auch den Steuerinformationsspeicher (22A) enthält, wobei der Datenspeicher (20A) die LUTs umfasst und der Steuerinformationsspeicher (22A) für jede LUT einen Zeiger auf eine Startadresse der LUT in dem Datenspeicher (20A) umfasst;
    - ein Auslesen des Steuerinformationsspeichers (22A), um die Startadresse einer spezifischen zu durchsuchenden LUT zu bestimmen; und
    - ein Durchsuchen der spezifischen LUT nach der ersten Kanalkennung, beginnend an der Startadresse der LUT in dem Datenspeicher (20A).

**12.** Verfahren nach Anspruch 11, wobei die LUTs in dem Datenspeicher (20A) eine nach der anderen gespeichert werden, so dass in dem Datenspeicher (20A) zwischen benachbarten LUTs keine Lücke besteht.

**13.** Verfahren nach Anspruche 11 oder 12, wobei die Größe der zu durchsuchenden LUT mittels Subtrahierens des Inhalts eines Zeigers auf die LUT, die der zu durchsuchenden LUT folgt, von dem Inhalt eines Zeigers auf die zu durchsuchende LUT abgeleitet wird.

**14.** Verfahren nach einem der Ansprüche 11 bis 13, wobei der erste Speicherblock (A) eine vordefinierte Größe besitzt.

**15.** Verfahren nach einem der Ansprüche 11 bis 14, wobei die Steuerinformationen ferner einen Zeiger auf die Endadresse der letzten LUT im Datenspeicher (20A) umfassen.

**16.** Verfahren nach einem der Ansprüche 11 bis 15, das ferner ein Definieren eines zweiten Speicherblocks (B) mit einer dem ersten Speicherblock (A) ähnlichen Struktur und ein Definieren eines Signals umfasst, das anzeigt, welcher der Speicherblöcke (A, B) gültige Informationen enthält.

**17.** Verfahren nach Anspruch 16, das ferner Folgendes umfasst:

- ein Schreiben des Speicherblocks (A, B), der keine gültigen Informationen enthält; und
- ein Auslesen und Durchsuchen des Speicherblocks (B, A), der gültige Informationen enthält.

**18.** Verfahren nach Anspruch 16 oder 17, wobei das Schreiben mittels der ersten Verarbeitungseinheit (14) durchgeführt wird, das Lesen und Durchsuchen mittels der zweiten Verarbeitungseinheit (16) durchgeführt wird und wobei die erste Verarbeitungseinheit (14) der zweiten Verarbeitungseinheit (16) signalisiert, welcher Speicherblock (A, B) gültige Informationen enthält.

**19.** Verfahren nach einem der Ansprüche 11 bis 18, wobei auf das Verändern einer einzelnen LUT hin ein gesamter Speicherblock (A, B) neu geschrieben wird.

**20.** Computerprogrammprodukt, das Programmcodeabschnitte zum Durchführen der Schritte eines der Ansprüche 1 bis 19 umfasst, wenn das Programmprodukt auf einem Computer läuft.

**21.** Computerprogrammprodukt nach Anspruch 20, das auf einem computerlesbaren Aufzeichnungsmedium gespeichert ist.

**22.** Vorrichtung in einem System zur drahtlosen Kommunikationen zum Durchsuchen einer aus einer Mehrzahl von Nachschlagetabellen (Look-up tables; LUTs) nach einer auf eine zweite Kanalkennung abzubilden ersten Kanalkennung, das Folgendes umfasst:

a) einen Datenspeicher (20A, 20B) zum Speichern der LUTs, wobei der Datenspeicher (20A, 20B) dynamisch in Abhängigkeit von der tatsächlichen Größe der LUTs zugewiesen wird;
b) einen Steuerinformationsspeicher (22A, 22B) zum Speichern von Steuerinformationen bezüglich einer oder mehrerer Positionen jeder LUT in dem Datenspeicher (20A, 20B); und
c) eine Verarbeitungseinheit (16)

- zum Auslesen des Steuerinformationsspeichers (22A, 22B), um eine oder mehrere Positionen in dem Datenspeicher (20A, 20B) einer spezifischen zu durchsuchenden LUT zu bestimmen und
- zum Zugreifen auf den Datenspeicher (20A, 20B) an der einen oder an den mehreren bestimmten Positionen, um die spezifische LUT nach der ersten Kanalkennung zu durchsuchen.

**23.** Vorrichtung nach Anspruch 22, die ferner eine weitere Verarbeitungseinheit (14) zum Bestimmen der tatsächlichen Größe der LUTs, zum Speichern der LUTs in dem Datenspeicher (20A, 20B) und zum Speichern der Steuerinformationen in dem Steuerinformationsspeicher (22A, 22B) umfasst.

**24.** Vorrichtung nach Anspruch 22 oder 23, wobei die LUTs und die Steuerinformationen in einem gemeinsamen DPRAM (12) gespeichert sind.

**25.** Vorrichtung nach Anspruch 23 oder 24, die ferner eine Signalgebungsleitung (19) umfasst, die zwischen den zwei Verarbeitungseinheiten (14, 16) angeordnet ist, wobei die Signalgebungsleitung eine Koordination der durch die zwei Verarbeitungseinheiten (14, 16) durchgeführten Operationen ermöglicht.

26. Transceiver (10) für ein System zur drahtlosen Kommunikation, der eine Vorrichtung gemäß einem der Ansprüche 22 bis 25 umfasst.

**Revendications**

1. Procédé de recherche, dans un système de communications sans fil, de l'une d'une pluralité de tables à consulter appelées ici LUT pour un premier indicateur de canal à appliquer sur un deuxième indicateur de canal, comprenant les étapes consistant à :

   - mémoriser les LUT dans une mémoire (20A, 20B) de données, la mémoire (20A, 20B) de données étant affectée dynamiquement aux LUT en fonction des tailles réelles des LUT ;
   - mémoriser dans une mémoire (22A, 22B) d'informations de commande les informations de commande se rapportant à une ou plusieurs positions de chaque LUT dans la mémoire (20A, 20B) de données ;
   - lire la mémoire (22A, 22B) d'informations de commande afin de déterminer une ou plusieurs positions dans la mémoire (20A, 20B) de données d'une LUT spécifique à rechercher ;
   - accéder à la mémoire (20A, 20B) de données dans l'une ou les plusieurs positions déterminées afin de rechercher la LUT spécifique pour le premier indicateur de canal.

2. Procédé selon la revendication 1,
   dans lequel on accède à la mémoire de données (20A, 20B) et à la mémoire (22A, 22B) d'informations de commande d'une part au moyen d'une première unité (14) de traitement qui mémorise les LUT et les informations de commande et d'autre part au moyen d'une deuxième unité (16) de traitement qui lit les informations de commande et recherche les LUT.

3. Procédé selon la revendication 2,
   dans lequel les accès de la première unité (14) de traitement et de la deuxième unité (16) de traitement sont exécutés simultanément.

4. Procédé selon l'une des revendications 1 à 3, comprenant en outre les étapes consistant à :

   - diviser la mémoire (20A, 20B) de données en une pluralité de parties de mémoire de données, chaque partie de mémoire de données ayant une taille de 2', où i=0,1,2,3,...l;
   - diviser chaque LUT en une pluralité de parties de LUT, chaque partie de LUT, à part les restantes, ayant une taille de $2^j$, où j = 0, 1, 2, 3, ... k ;
   - mémoriser chaque partie de LUT dans une partie de mémoire de données qui a une taille appropriée ; et
   - mémoriser pour chaque LUT dans la mémoire (22A, 22B) d'informations de commande les informations de commande comprenant les positions dans la mémoire de données des parties de LUT individuelles des LUT.

5. Procédé selon la revendication 4,
   dans lequel au moins certaines parties de LUT d'une LUT unique ont des tailles différentes.

6. Procédé selon la revendication 4 ou 5,
   dans lequel la mémoire (20A, 20B) de données comprend $m_i$ parties de mémoire de données de taille $2^z$, où z = 0, 1, 2, 3, etc.

7. Procédé selon la revendication 6,
   dans lequel $m_i = 2^x$, où x = 0, 1, 2, 3, etc.

8. Procédé selon la revendication 6 ou 7,
   dans lequel la mémoire (20A, 20B) de données est divisée de telle manière que $M_{i+1} \leq m_i$.

9. Procédé selon l'une des revendications 4 à 8,
   dans lequel la mémorisation des informations de commande comprend pour chaque LUT la mémorisation d'un paramètre reflétant la taille de la LUT.

**10.** Procédé selon l'une des revendications 4 à 9, dans lequel les LUT ont des tailles $s_p = 2^y$, où $y = 0, 1, 2, 3, ... S_p$.

**11.** Procédé selon l'une des revendications 1 à 3, comprenant en outre les étapes consistant à :

- définir un premier bloc (A) de mémoires contenant à la fois la mémoire (20A) de données et la mémoire (22A) d'informations de commande, la mémoire (20A) de données comprenant les LUT et la mémoire (22A) d'informations de commande comprenant pour chaque LUT un pointeur vers une adresse de démarrage de la LUT dans la mémoire (20A) de données ;
- lire la mémoire (22A) d'informations de commande afin de déterminer l'adresse de démarrage d'une LUT spécifique à rechercher ; et
- rechercher la LUT spécifique pour le premier indicateur de canal en démarrant à l'adresse de démarrage de la LUT dans la mémoire (20A) de données.

**12.** Procédé selon la revendication 11, dans lequel les LUT sont mémorisées dans la mémoire (20A) de données l'une après l'autre de manière à ce qu'il n'y ait pas d'espace dans la mémoire (20A) de données entre des LUT adjacentes.

**13.** Procédé selon la revendication 11 ou 12, dans lequel la taille de la LUT à rechercher est établie en soustrayant le contenu d'un pointeur vers la LUT suivant la LUT à rechercher du contenu du pointeur vers la LUT à rechercher.

**14.** Procédé selon l'une des revendications 11 à 13, dans lequel le premier bloc (A) de mémoires à une taille prédéfinie.

**15.** Procédé selon l'une des revendications 11 à 14, dans lequel les informations de commande comprennent en outre un pointeur vers l'adresse finale de la dernière LUT dans la mémoire (20A) de données.

**16.** Procédé selon l'une des revendications 11 à 15, comprenant en outre l'étape consistant à définir un deuxième bloc (B) de mémoires ayant une structure similaire à celle du premier bloc (A) de mémoires et à définir un signal indiquant lequel des blocs (A, B) de mémoire contient des informations valides.

**17.** Procédé selon la revendication 16, comprenant en outre les étapes consistant à:

- écrire le bloc (A, B) de mémoires qui ne contient pas d'informations valides ; et
- lire et rechercher le bloc (B, A) de mémoires qui contient des informations valides.

**18.** Procédé selon la revendication 16 ou 17, dans lequel l'écriture est exécutée par la première unité (14) de traitement, la lecture et la recherche sont exécutées par la deuxième unité (16) de traitement, et dans lequel la première unité (14) de traitement signale à la deuxième unité (16) de traitement quel bloc (A, B) de mémoires contient des informations valides.

**19.** Procédé selon l'une des revendications 11 à 18, dans lequel lors du changement d'une seule LUT, la totalité d'un bloc (A, B) de mémoires est réécrite.

**20.** Produit de programme d'ordinateur comprenant des parties de code de programme destinées à exécuter les étapes de l'une des étapes 1 à 19 quand le produit de programme est lancé sur un ordinateur.

**21.** Produit de programme d'ordinateur selon la revendication 20, mémorisé sur un support de mémoire pouvant être lu par un ordinateur.

**22.** Dispositif de recherche, dans un système de communications sans fil, de l'une d'une pluralité de tables à consulter appelées ici LUT pour un premier indicateur de canal à appliquer sur un deuxième indicateur de canal, comprenant :

a) une mémoire (20A, 20B) de données destinée à mémoriser les LUT, la mémoire (20A, 20B) de données étant affectée dynamiquement aux LUT en fonction des tailles réelles des LUT ;
b) une mémoire (22A, 22B) d'informations de commande destinée à mémoriser les informations de commande se rapportant à une ou plusieurs positions de chaque LUT dans la mémoire (20A, 20B) de données ; et

c) une unité (16) de traitement destinée à :

- lire la mémoire (22A, 22B) d'informations de commande afin de déterminer une ou plusieurs positions dans la mémoire (20A, 20B) de données d'une LUT spécifique à rechercher et
- accéder à la mémoire (20A, 20B) de données dans l'une ou les plusieurs positions déterminées afin de rechercher la LUT spécifique pour le premier indicateur de canal.

23. Dispositif selon la revendication 22, comprenant en outre une autre unité (14) de traitement destinée à déterminer la taille réelle des LUT, à mémoriser les LUT dans la mémoire (20A, 20B) de données, et à mémoriser les informations de commande dans la mémoire (22A, 22B) d'informations de commande.

24. Dispositif selon la revendication 22 ou 23, dans lequel les LUT et les informations de commande sont mémorisées dans une mémoire DPRAM commune.

25. Dispositif selon la revendication 23 ou 24, comprenant en outre une ligne (19) de signalisation disposée entre les deux unités (14, 16) de traitement, la ligne de signalisation permettant une coordination des opérations exécutées par les deux unités (14, 16) de traitement.

26. Emetteur-récepteur (10) destiné à un système de communication sans fil, comprenant un dispositif selon l'une des revendications 22 à 25.

14

12

16

18

17

**Fig. 1**

10

N

20 A

12

n+1
n
0

22 A

**Fig. 6**

14 ⟷ 28

18

12

24

17 19

26

16 10

## Fig. 2

N

20 B — Block B

(N+1)/2
((N+1)/2)-1

22 B — Pointers to block B

12

20 A — Block A

22 A — Pointers to block A

0

## Fig. 3

RamSwitchReq

ASICMemBusy

DPInt

Case1 | ASIC RAM= A | ASIC RAM = B |

# Fig.4

RamSwitchReq

ASICMemBusy

DPInt

Case2 | ASIC RAM= A | ASIC RAM = B |

# Fig. 5

Fig. 7